# EUROPÄISCHE PATENTSCHRIFT

(11) **EP 1 115 275 B1**
(45) Veröffentlichungstag und Bekanntmachung des Hinweises auf die Patenterteilung: **19.11.2003**
(21) Anmeldenummer: 00948415.5
(22) Anmeldetag: 20.07.2000
(51) Int. Cl.: A01D 80/02

(54) **ZINKENELEMENT UND LANDWIRTSCHAFTLICHE MASCHINE**
TINE ELEMENT AND AGRICULTURAL MACHINERY
ELEMENT A DENTS ET MACHINE AGRICOLE

(30) Priorität: 24.07.1999 DE 29912957 U
(43) Veröffentlichungstag der Anmeldung: 18.07.2001
(73) Patentinhaber: MAASLAND N.V., 3155 PD Maasland (NL)
(72) Erfinder: VAN DEN ENGEL, Alfonsus, Jacobus, NL-3123 CM Schiedam (NL)
(74) Vertreter: Corten, Maurice Jean F.M.
(86) Internationale Anmeldenummer: NL0000511
(87) Internationale Veröffentlichungsnummer: WO01006836

(56) Entgegenhaltungen:
- DE-A- 2 225 846
- FR-A- 2 263 678
- GB-A- 1 421 731

## Beschreibung

Die Erfindung betrifft ein Zinkenelement gemäss dem Oberbegriff des Anspruchs 1. Ein derartiges Element ist zum Beispiel beschrieben in FR-A-2.263.678. Die gebogenen, hakenförmigen Zinkenenden sorgen dafür, dass beim Zettwenden oder beim Rechen das zu verlagernde Heu oder Gras gut aufgenommen und von den Zinkenenden mitgezogen wird. Das Ende eines der Zinkenteile reicht im Betrieb in seiner tiefsten Stellung bis zum Boden. Die daraus folgende, wiederholte hohe Belastung dieses Zinkenteiles führt zu einer Beeinträchtigung der Langlebigkiet des ganzen Elementes.

Ziel der vorliegenden Erfindung ist es, ein verbessertes Zinkenelement zu verschaffen. Dies wird durch die Merkmale des kennzeichenden Teils des Anspruchs 1 erreicht. Die Erfindung beruht auf der Erkenntnis, dass es bei ziehend arbeitenden Zinkenelementen durch die kennzeichnenden Massnahmen möglich ist, unter Beibehaltung des guten Arbeitsresultates, eine verbesserte Bodenanpassung und eine erhöhte Lebensdauer zu erreichen. Es hat sich nämlich ergeben, dass das gebogene Zinkenende auch bei einem weniger steifen Zinken immer noch ein einwandfreies Arbeitsresultat gewährleistet.

Die Erfindung wird im folgenden anhand der Zeichnungen näher erläutert. Es zeigen
Figur 1 eine schematische Seitenansicht eines an einem Tragarm einer Heuwerbungsmaschine befestigten Zinkenelements;
Figur 2 eine schematische Ansicht des Zinkenelements gemäss dem Pfeil II in Figur 1;
Figur 3 eine schematische Ansicht eines weiteren Zinkenelements;
Figur 4 eine schematische Darstellung eines Zinkenelements im Betrieb und
Figur 5 eine schematische Ansicht des Zinkenelements gemäss dem Pfeil V in Figur 4.

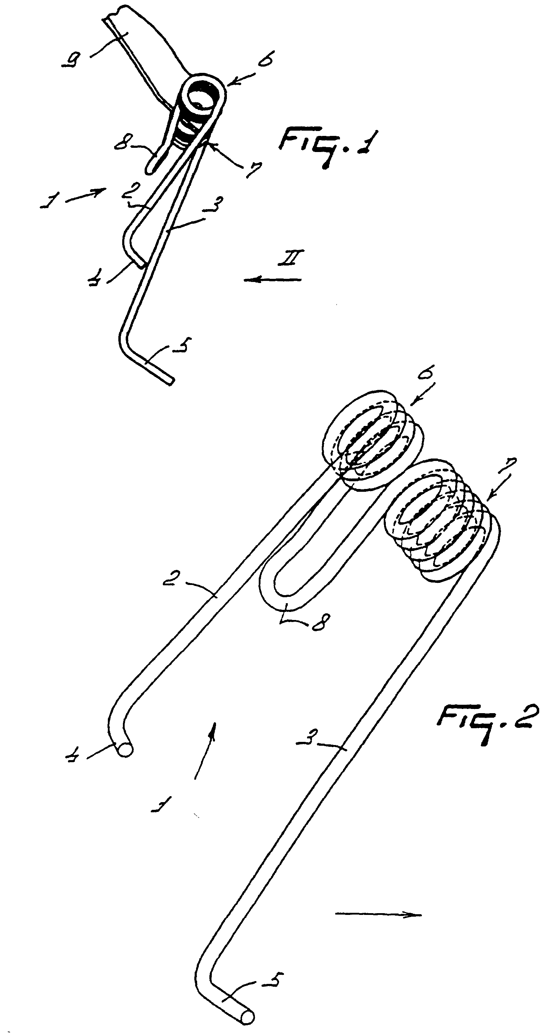

Die Figur 1 zeigt schematisch eine Seitenansicht eines an einer Heuwerbungsmaschine befestigten Zinkenelements 1 gemäss einer Ausführungsform der Erfindung. In an sich bekannter Weise dient das Zinkenelement 1 zum Verlagern (Aufnehmen, Mitnehmen und wieder Ablegen) von am Boden liegendem, nicht wiedergegebenem Erntegut mit einem Zettwender oder einer Rechmaschine. Durch eine entsprechende Befestigung des Zinkenelements 1 an der jeweiligen Heuwerbungsmaschine kann es sowohl zum Zetten als auch zum Rechen eingesetzt werden.

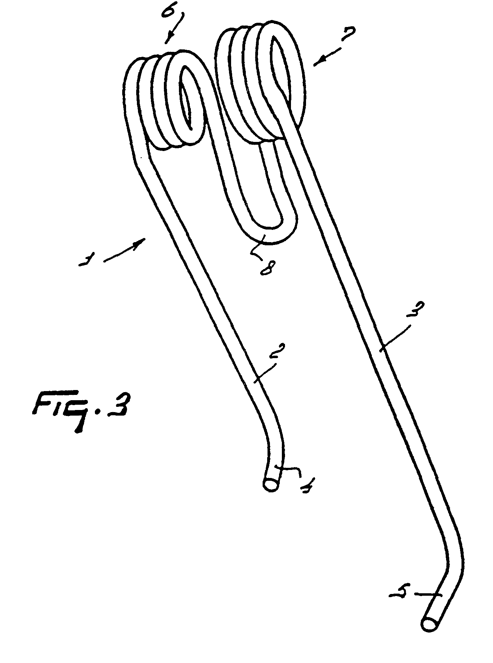

Das Zinkenelement 1 weist einen ersten und einen zweiten Zinkenteil 2 bzw. 3 auf. Diese Zinkenteile 2, 3 sind zwar im wesentlichen gerade ausgeführt, jedoch weisen sie jeweils ein gebogenes Zinkenende 4, 5 auf, so dass sie dazu geeignet sind, das Erntegut im Betrieb ziehend (mitnehmend wie ein Rechen) mitzunehmen. Über jeweilige schraubenfederförmige Windungsteile 6, 7 sind sie mit einem gemeinsamen Mittelteil 8 verbunden. Die Längen des ersten und des zweiten Zinkenteils 2, 3 sind im gezeigten Ausführungsbeispiel unterschiedlich. Das Zinkenelement 1 ist am Tragarm 9 einer Heuwerbungsmaschine befestigt. Beim Zetten oder Rechen ist der Bewegungsablauf des Tragarms 9, und somit des Zinkenelements 1, an sich bekannt. Die an sich bekannte Heuwerbungsmaschine ist auch nicht weiter wiedergegeben. In der Figur 2 ist eine schematische Ansicht des Zinkenelements 1 gemäss dem Pfeil II in Figur 1 wiedergegeben.

Die Windungsteile 6, 7 sind derart ausgeführt, dass sie dazu beitragen, dass die Zinkenteile 2, 3 unterschiedliche Federungseigenschaften (Biegsamkeit, Elastizität, Flexibilität, Steifheit, Starre) besitzen. Im gezeigten Ausführungsbeispiel weisen die Windungsteile 6, 7 ungleich viele Windungen auf. Der Windungsteil 7 des längeren Zinkenteils 3 weist mehr Windungen auf (vorzugsweise eine oder zwei mehr) als der Windungsteil 6 des kürzeren Windungsteils 2. Dadurch ist der längere Zinken 3 weniger steif, so dass seine Bodenanpassung verbessert ist. Der kürzere Zinken 2 jedoch behält seine Steifheit. Die Fähigkeit zum Auf- und Mitnehmen von Erntegut scheint beim längeren Zinken 3 durch die erhöhte Flexibilität zwar leicht beeinträchtigt, aber das hakenförmige Zinkenende 5 gewährleistet immer noch ein einwandfreies Arbeitsresultat. Dies ist nur dadurch möglich, dass die Zinkenenden 4, 5 derart gebogen sind, dass das Zinkenpaar 2, 3 ziehend (mitnehmend wie ein Rechen) arbeitet. Es hat sich herausgestellt, dass die Lebensdauer des Zinkenpaares 1 erheblich länger ist als diejenige eines herkömmlichen Zinkenelements ohne die erfindungsgemässen Massnahmen.

Gemäss einer weiteren, nicht dargestellten Ausführungsform werden bei einem Zinkenelement 1 unterschiedliche Materialstärken oder unterschiedliche Materialhärten verwendet. So kann der Windungsteil 7 und/oder der Zinkenteil 3 (zumindest teilweise) aus einem dünneren oder einem weniger harten Material hergestellt werden. Vorzugsweise ist das Zinkenelement 1 einstückig ausgeführt (zum Beispiel aus einem einzigen Stück Federstahldraht hergestellt). Auf diese Weise ist die Herstellung kostengünstig. Eine unterschiedliche Härte kann auch bei einem einstückigen Element 1 in an sich bekannter Weise durch entsprechende Bearbeitung des Materials realisiert werden.

Weiterhin kann das Material, aus dem die Windungsteile 6, 7 hergestellt sind, beim einen Windungsteil 6 zumindest teilweise einen unterschiedlich grossen Querschnitt und/oder unterschiedliche Materialeigenschaften als beim anderen Windungsteil 7 haben. Auch kann das Zinkenelement 1 aus unterschiedlichen Legierungen hergestellt sein.

Vorzugsweise bildet das gebogene Zinkenende 4, 5 mit dem entsprechenden Zinkenteil 2, 3 einen Winkel von etwa 80° bis 90°. Auf diese Weise wird ein sehr gutes Arbeitsresultat erreicht.

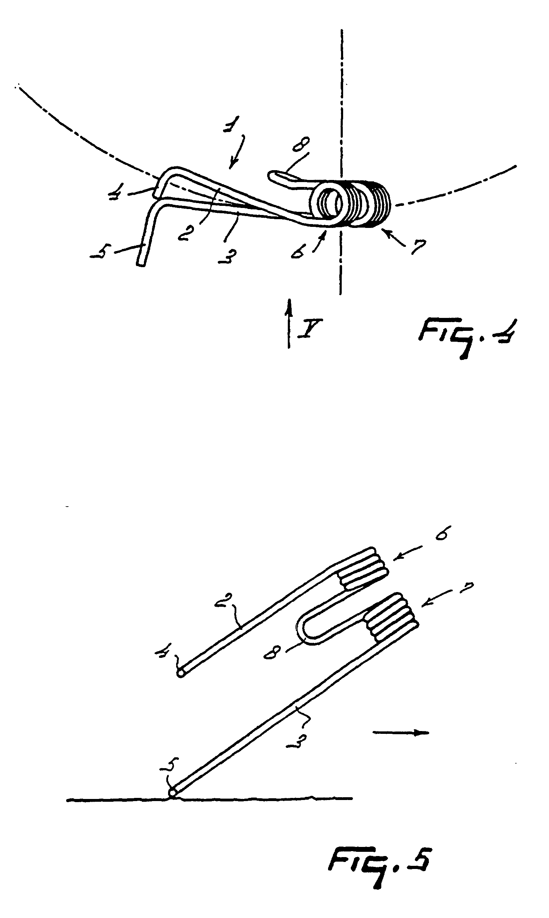

Die Figur 3 zeigt eine schematische Ansicht eines weiteren Zinkenelements. Die spiralförmigen Windungsteile 6, 7 bilden im wesentlichen jeweils einen zylinderförmigen Teil, wobei die Diameter dieser zylinderförmigen Teile (eigentlich: die Durchmesser der beiden Spiralen) unterschiedlich gross sind. Dank der ziehenden Wirkung der Zinkenenden 4, 5 wird auch so erreicht, dass die Flexibilität des im Betrieb unteren Zinkens 3 erhöht wird, so dass ohne Einbussen bei der Qualität der Arbeit eine bessere Bodenanpassung möglich ist.

Die Figuren 4 und 5 illustrieren eine mögliche Funktionsweise eines Zinkenelements 1 im Betrieb. Die Zinkenteile 2, 3 sind in etwa mit ihrer Bewegungsrichtung gleichgerichtet und die Zinkenenden 4, 5 ziehen das (nicht dargestellte) Erntegut mit. Somit ist ersichtlich, dass die auftretenden Zugkräfte hauptsächlich in der Bewegungsrichtung wirken, so dass die radial zur Bewegungsrichtung erhöhte Flexibilität des unteren Zinkens 3 das Arbeitsresultat nicht beeinträchtigt.

## Patentansprüche

1. Zinkenelement (1) zum Verlagern von Erntegut mit einem ersten (2) und einem zweiten (3) Zinkenteil, welche Zinkenteile (2, 3) über jeweilige Windungsteile (6, 7) mit einem gemeinsamen Mittelteil (8) verbunden sind, wobei zumindest ein Zinkenteil (2, 3) ein gebogenes Zinkenende (4, 5) aufweist, das dazu geeignet ist, im Betrieb das Erntegut ziehend mitzunehmen, wobei die Windungsteile (6, 7) derart ausgeführt sind, dass sie dazu beitragen, dass die Zinkenteile (2, 3) unterschiedliche Federungseigenschaften besitzen, und wobei das Zinkenelement einstückig ausgeführt ist, **dadurch gekennzeichnet, dass** das Material, aus dem die Windungsteile (6, 7) hergestellt sind, beim einen Windungsteil (6) zumindest teilweise unterschiedliche Materialeigenschaften als beim anderen Windungsteil (7) hat.

2. Zinkenelement nach Anspruch 1, **dadurch gekennzeichnet, dass** die Windungsteile (6, 7) ungleich viele Windungen aufweisen.

3. Zinkenelement nach Anspruch 1 oder 2, **dadurch gekennzeichnet, dass** der Windungsteil (7) eines längeren Zinkenteils (3) mehr Windungen aufweist als derjenige (6) eines kürzeren Windungsteils (2).

4. Zinkenelement (1) nach einem der Ansprüche 1 bis 3, **dadurch gekennzeichnet, dass** der eine Windungsteil (7) eine oder zwei Windungen mehr aufweist als der andere Windungsteil (6).

5. Zinkenelement (1) nach einem der Ansprüche 1 bis 4, **dadurch gekennzeichnet, dass** die spiralförmigen Windungsteile (6, 7) im wesentlichen jeweils einen zylinderförmigen Teil bilden, wobei die Durchmesser dieser zylinderförmigen Teile unterschiedlich gross sind.

6. Zinkenlement (1) nach einem der Ansprüche 1 bis 5, **dadurch gekennzeichnet, dass** das Material, aus dem die Windungsteile (6, 7) hergestellt sind, beim einen Windungsteil (6) zumindest teilweise einen unterschiedlich grossen Querschnitt als beim anderen Windungsteil (7) hat.

7. Zinkenelement (1 nach einem der Ansprüche 1 bis 6, **dadurch gekennzeichnet, dass** das Material, aus dem die Windungsteile (6, 7) hergestellt sind, beim einen Windungsteil (6) zumindest teilweise eine unterschiedlich grosse Härte als beim anderen Windungsteil (7) aufweist.

8. Zinkenelement (1) nach einem der Ansprüch 1 bis 7, **dadurch gekennzeichnet, dass** es aus unterschiedlichen Legierungen hergestellt ist.

9. Zinkenelement (1) nach einem der Ansprüche 1 bis 8, **dadurch gekennzeichnet, dass** das gebogene Zinkenende (4, 5) mit dem entsprechenden Zinkenteil (2, 3) einen Winkel von etwa 80° bis 90° einschliesst.

10. Landwirtschaftliche Maschine mit einem Zinkenelement (1) nach einem der Ansprüch 1 bis 9.

## Claims

1. A tine element (1) for displacing harvest product, comprising first (2) and second (3) tines each linked by coiled parts (6, 7) to a common central part (8), at least one tine (2, 3) being provided with a curved tine end (4, 5) which is adapted to take along harvest product by driving in traction, the coiled parts (6, 7) being designed such that they contribute to the tines (2, 3) having different elasticity characteristics, said tine element being designed as a single one, **characterized in that** the material from which the coiled parts (6, 7) are made has with one coiled part (6) at least partially different material characteristics than with the other coiled part (7).

2. A tine element as claimed in claim 1, **characterized in that** the coiled parts (6, 7) are provided with a different number of coils.

3. A tine element as claimed in claim 1 or 2, **characterized in that** the coiled part (7) of a longer tine (3) is provided with more coils than the coiled part (6) of a shorter tine (2).

4. A tine element (1) as claimed in any one of claims 1 to 3, **characterized in that** one coiled part (7) comprises one or two more coils than the other coiled part (6).

5. A tine element (1) as claimed in any one of claims 1 to 4, **characterized in that** the spiral shaped coiled parts (6, 7) each form a substantially cylindrical part, while the diameters of said cylindrical parts differ in size.

6. A tine element (1) as claimed in any one of claims 1 to 5, **characterized in that** the material from which the coiled parts (6, 7) are made has with one coiled part (6) at least partially a different cross-section than with the other coiled part (7).

7. A tine element (1) as claimed in any one of claims 1 to 6, **characterized in that** the material from which the coiled parts (6, 7) are made has with one coiled part (6) at least partially a different hardness than with the other coiled part (7).

8. A tine element (1) as claimed in any one of claims 1 to 7, **characterized in that** said element (1) is made from different alloys.

9. A tine element (1) as claimed in any one of claims 1 to 8, **characterized in that** the curved tine end (4, 5) includes an angle of approximately 80° to 90° with the associated tines (2, 3).

10. An agricultural machine with a tine element (1) as claimed in any one of claims 1 to 9.

## Revendications

1. Elément à dents (1) destiné au déplacement de récoltes ayant une première (2) et une deuxième (3) partie à dent, lesquelles parties à dent (2, 3) sont reliées sur des parties d'enroulement (6, 7) respectives par une partie centrale (8) commune, dans lequel, au moins une partie à dent (2, 3) comporte une extrémité à dent courbée (4, 5) permettant, en fonctionnement, d'emporter les récoltes en les tirant, dans lequel, les parties d'enroulement (6, 7) sont formées de telle sorte qu'elles contribuent à ce que les parties à dent (2, 3) possèdent des propriétés de suspension différentes, et dans lequel, l'élément à dents est formé d'un seul tenant, **caractérisé en ce que** la matière dans laquelle les parties enroulées (6, 7) sont fabriquées présente pour une partie d'enroulement (6) au moins partiellement des propriétés matérielles différentes par rapport à l'autre partie d'enroulement (7).

2. Elément à dents selon la revendication 1, **caractérisé en ce que** les parties d' enroulement (6, 7) comportent de manière inégale de nombreux enroulements.

3. Elément à dents selon la revendication 1 ou 2, **caractérisé en ce que** la partie d'enroulement (7) d'une partie à dent plus longue (3) comporte plus d'enroulements que celle d'une partie d'enroulement plus courte (2).

4. Elément à dents (1) selon l'une quelconque des revendications 1 à 3, **caractérisé en ce que** l'une des parties d'enroulement (7) comporte un ou deux enroulements de plus que l'autre partie d'enroulement (6).

5. Elément à dents (1) selon l'une quelconque des revendications 1 à 4, **caractérisé en ce que** les parties d'enroulement du type spiral (6, 7) forment chacune essentiellement une partie du type cylindre, moyennant quoi, les diamètres de ces parties du type cylindre sont de grandeur différente.

6. Elément à dents (1) selon l'une quelconque des revendications 1 à 5, **caractérisé en ce que** la matière dans laquelle les parties d'enroulement (6, 7) sont fabriquées présente pour une partie d'enroulement (6) au moins partiellement une section transversale de taille différente par rapport à l'autre partie d'enroulement (7).

7. Elément à dents (1) selon la revendication 1 à 6, **caractérisé en ce que** la matière dans laquelle les parties d'enroulement (6, 7) sont fabriquées présente pour une partie d'enroulement (6) au moins partiellement une dureté différente par rapport à l'autre partie d'enroulement (7)

8. Elément à dents (1) selon l'une quelconque des revendications 1 à 7, **caractérisé en ce qu'**il est fabriqué à partir de différents alliages.

9. Elément à dents (1) selon l'une quelconque des revendications 1 à 8, **caractérisé en ce que** l'extrémité à dent courbée (4, 5) forme avec la partie à dent correspondante (2, 3) un angle d'environ 80° à 90°.

10. Machine agricole ayant un élément à dents (1) selon l'une quelconque des revendications 1 à 9.
